# EUROPÄISCHE PATENTSCHRIFT

(11) **EP 3 509 834 B1**
(45) Veröffentlichungstag und Bekanntmachung des Hinweises auf die Patenterteilung: **17.11.2021**
(21) Anmeldenummer: 17761064.9
(22) Anmeldetag: 29.08.2017
(51) Int. Cl.: B31F 1/07, B31B 50/88

(54) **PRÄGEWERKZEUG ZUM VERFORMEN VON GLATTEN UND GEPRÄGTEN FOLIEN**
EMBOSSING TOOL FOR DEFORMING SMOOTH AND EMBOSSED FILMS
OUTIL D'ESTAMPAGE DESTINÉ À LA MISE EN FORME DE FILMS LISSES ET GAUFRÉS

(30) Priorität: 08.09.2016 CH 11632016
(43) Veröffentlichungstag der Anmeldung: 17.07.2019
(73) Patentinhaber: Berhalter AG, 9443 Widnau (CH)
(72) Erfinder: SCHUMAN, Dalibor, 9443 Widnau (CH); STEINER, Markus, 9445 Rebstein (CH)
(74) Vertreter: Gachnang, Hans Rudolf
(86) Internationale Anmeldenummer: PCT/EP2017/071594
(87) Internationale Veröffentlichungsnummer: WO 2018/046340

(56) Entgegenhaltungen:
- US-A- 1 161 881
- US-A- 5 540 153
- US-B1- 6 186 936
- US-B1- 6 349 639

## Beschreibung

Gegenstand der Erfindung ist ein Prägewerkzeug zum Verformen von glatten und geprägten Folien gemäss Oberbegriff des Patentanspruchs 1.

Folien aus Metall oder aus Laminaten von Metall und Kunststoff oder Papier, meist aus Aluminium, finden Verwendung in der Verpackungsindustrie zum Verschliessen von Behältern von Halbkonserven wie Joghurtbecher, aber auch von Kaffeekapseln oder Kaffeesachets für Gewerbebetriebe und für weitere Anwendungen. Aus solchen Folien werden entsprechend der zu verschliessenden Öffnung am Behälter geformte Ausschnitte ausgestanzt und für die Weiterverarbeitung, das heisst das Aufdeckeln gestapelt. Stanzlinge aus glatten Folien verursachen bei der Weiterverarbeitung insbesondere beim Aufdeckeln Probleme, da sie aneinander kleben und folglich nicht oder nur fehlerhaft vereinzelt werden können. Dies führt zu Ausschuss an den Abfüll- und Aufdeckeinmaschinen. Es ist folglich seit geraumer Zeit üblich, das Ausgangsmaterial für solche als Deckel verwendete Stanzlinge mit einer Prägung zu versehen. Diese Prägung wird üblicherweise mit einer Prägewalze aufgebracht. Die derart mit einer rauen, nicht glatten Oberfläche versehenden Stanzlinge, neigen wesentlich weniger zum gegenseitigen Verkleben, wenn sie zu tausenden gestapelt werden.

Durch diese Verformung der Folien wird jedoch verhindert, dass in exakt vorgesehenen Bereichen produktespezifische Markierungen aufgebracht werden können. Beispielsweise müssen Strichcodes aufgebracht werden, um die einzelnen Gebinde nach deren Herstellung identifizieren zu können. So muss eine Kaffee-/Teezubereitungsmaschine erkennen können, ob in der eingeführten, durch Folien verschlossenen Verpackung Tee oder Kaffee abgefüllt ist und welche Sorte dieser Produkte, um den passenden Brühvorgang durchführen zu können. Im Weiteren lässt sich durch einen Strichcode oder eine äquivalente Markierung der Maschine erkennen, von welcher Firma das zu verarbeitende Gebinde stammt und ob dieses auf der Maschine verarbeitbar ist oder nicht. Durch den Strichcode lassen sich unzählige weitere Angaben zum Produkt speichern.

Wird nun ein solcher Strichcode auf eine mit Prägungen versehene raue Folie aufgebracht, so wird es für das Lesegerät in der Verarbeitungsmaschine schwierig, den Strichcode zu lesen, da dieser nicht auf einer ebenen Fläche aufgebracht ist.

Es sind bereits Vorrichtungen bekannt, mit denen die Bereiche, in denen Strichcodes aufgebracht werden müssen, nachträglich geglättet werden. Eine solche Vorrichtung verwendet dazu einen Stempel, mit dem die in einem vorangegangenen Prägevorgang die Prägungen geglättet und der Druckbereich ausgeebnet werden kann. Dieses Vorgehen benötigt, um einigermassen akzeptable Resultate, d.h. glatte Bereiche zu erzielen, hohe Kräfte, welche die Präge- und Stanzvorrichtung im Übermass strapaziert. Trotz sehr hoher Kräfte, wird demnach kein befriedigendes Ergebnis, das heisst eine absolut glatte Oberfläche des vormals geprägten rauen Bereichs erreicht.

Aus den Druckschriften US 6,349,639, US 6,186,936 und US 1,161,881 sind Prägevorrichtungen bekannt, bei denen entweder die Matrize oder die Patrize auf elastischen Platten gelagert sind. Solche Vorrichtungen haben den Nachteil, dass hohe Kräfte notwendig sind, um Prägungen zu erzeugen bzw. um vorhandene Prägungen zu glätten. Die hohen Kräfte können nur durch Prägevorrichtungen aufgebracht werden, wenn diese in Pressen mit entsprechend stabilen Gehäusen angeordnet sind. Solcher Art ausgeführte Pressen sind teuer in der Herstellung und im Betrieb.

In einer weiter bekannten Druckschrift (US 5,540,153) erfolgt das Prägen rotativ und es wird wiederum nur ein Teil der Prägevorrichtung elastisch gelagert. Das Aufbringen hoher Prägekräfte ist folglich nur mit entsprechend aufwendig gebauten Vorrichtungen möglich.

Eine Aufgabe der vorliegenden Erfindung besteht nun darin, eine Vorrichtung zum Verformen von glatten und geprägten Folien zu schaffen, mit welchem Prägungen auf Folien rückgängig gemacht werden können und eine glatte Oberfläche der Folie in einem vorgegebenen Bereich erlangt werden kann.

Eine weitere Aufgabe der Erfindung besteht darin, auch Prägungen, das heisst Verformungen auf glatten Folien aufzubringen mit einer geringeren Prägekraft als beim herkömmlichen Prägen.

Gelöst wird diese Aufgabe durch ein Prägewerkzeug gemäss den Merkmalen des Patentanspruchs 1. Vorteilhafte Ausgestaltungen des Prägewerkzeugs sind in den abhängigen Ansprüchen umschrieben.

Durch eine elastische Abstützung der Matrize und/oder der Patrize an der Rückseite des Prägebereichs (Erhebungen oder Vertiefungen) wird erreicht, dass der geprägte Bereich mit geringer Presskraft nicht nur teilweise, sondern vollständig rückgängig gemacht und eine glatte Oberfläche an der Folie erreicht werden kann. Es wird folglich nicht nur möglich, einen geprägten Bereich wieder zu glätten, sondern dieser Vorgang kann zudem mit einer wesentlichen geringeren Kraft erreicht werden.

Nicht nur das Entfernen bzw. Rückgängigmachen von Prägungen wird durch das Unterlegen der Matrize und/oder der Patrize erreicht, sondern auch das Prägen von glatten Folienbereichen kann mit wesentlich geringerer Kraft und damit geringerer Beanspruchung der Presse/der Vorrichtung erreicht werden.

Anhand zweier Ausführungsbeispiele wird der Stand der Technik und die Erfindung näher beschrieben. Es zeigen:
- Figur 1: eine schematische Explosionsdarstellung einer Vorrichtung zum Entfernen von Prägungen,
- Figur 2: einen Querschnitt von Figur 1 durch eine Vorrichtung zum Entfernen bzw. Rückgängigmachen einer Prägung auf einer geprägten Folie,

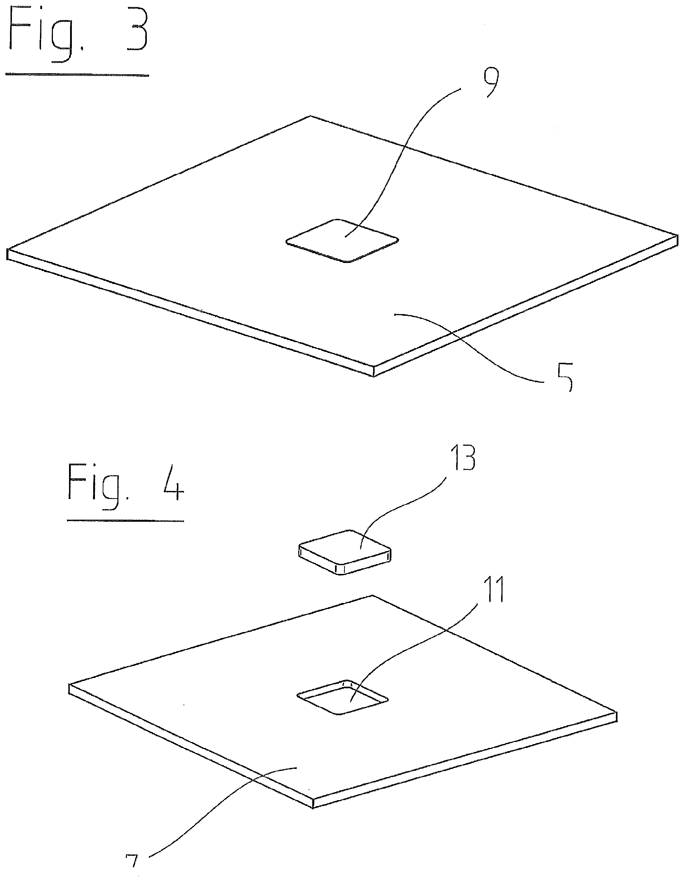

- Figur 3: eine Ansicht einer Matrize oder Stempelplatte,
- Figur 4: eine Ansicht einer Patrize oder Aufnahmeplatte mit Ausgleichselement,

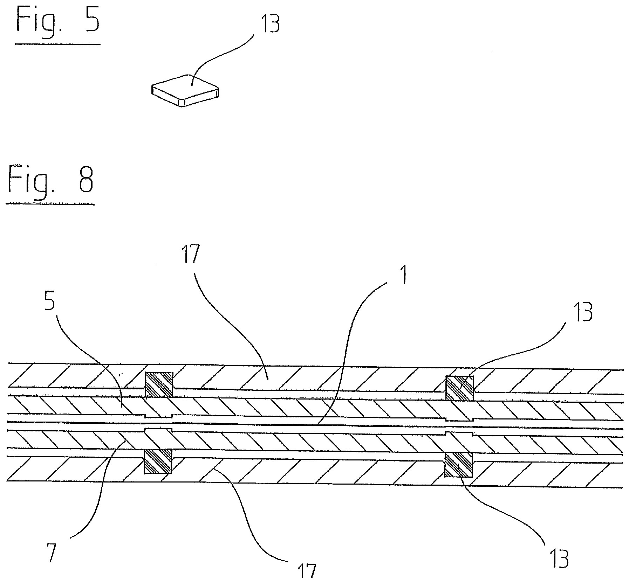

- Figur 5: eine Ansicht eines Ausgleichselement zum Einlegen in die Patrize,
- Figur 6: eine schematische Explosionsdarstellung einer Vorrichtung zum Prägen einer glatten Folie (Ansicht von oben),
- Figur 7: eine schematische Explosionsdarstellung einer Vorrichtung zum Prägen einer glatten Folie (Ansicht von unten),
- Figur 8: einen Querschnitt in Figur 6 durch eine Vorrichtung zum Prägen einer Folie gem. Fig. 6 und 7.

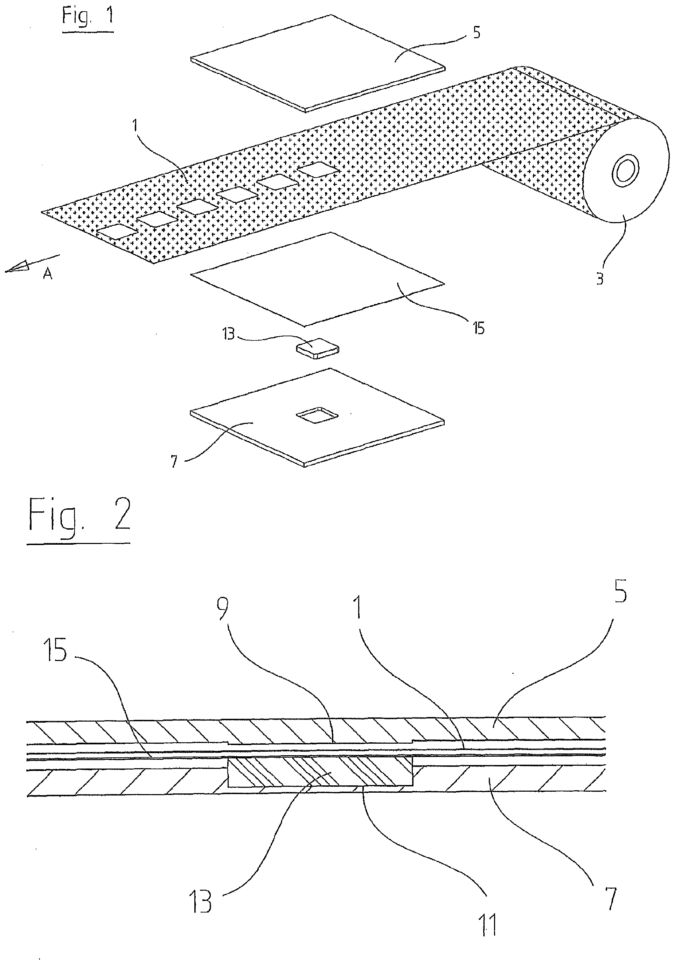

Zum Stand der Technik ist in der schematischen Darstellung in Figur 1 als Explosionsdarstellung das Werkzeug, d.h. die Vorrichtung zum Entfernen bzw. Rückgängigmachen ausgewählter Bereiche von Prägungen auf geprägten Folien 1 dargestellt. Oberhalb der Folie 1, die ab Coil 3 zwischen einer Matrize oder Stempelplatte 5 und einer Patrize oder Aufnahmeplatte 7 hindurchführbar ist, ist an der Unterseite der Matrize 5 eine Erhebung, hier eine Erhebung 9 mit glatter Oberfläche ausgebildet. Der Querschnitt der Erhebung 9 entspricht der Fläche, welche auf der bereits geprägten Folie die Prägung rückgängig, d.h. die Oberfläche der Folie 1 wieder völlig glatt verformen soll (Fig. 2). In der Patrize 7 ist in einer Ausnehmung 11 ein Ausgleichselement 13 eingelegt. Das Ausgleichselement 13 überragt die Oberfläche der Patrize 7 um einige Zehntelsmillimeter. Der Querschnitt des Ausgleichselements 13 entspricht im Wesentlichen mindestens dem Querschnitt der Erhebung 9 in der Matrize 5.

Das Ausgleichselement 13 kann einen Körper aus Polyurethan mit einer Shore-Härte von 80 bis 90 umfassen oder einen ähnlich elastischen Kunststoff.

Optional liegt über dem Ausgleichselement 13 ein dünnes, wenige Zehntelsmillimeter dickes Schutzblech 15, welches verhindern kann, dass die in Richtung des Pfeils A zwischen der Matrize 5 und der Patrize 7 hindurchgeführte Folie 1 an der Oberfläche des Ausgleichselements 13 reiben bzw. durch Reibung verzögert und beschädigt werden kann.

Die Matrize 5 ist in einer Presse am oberen, meist dem beweglichen Teil befestigt. Die Patrize 7 liegt befestigt auf dem meist feststehenden Teil der Presse auf. Eine Presse ist in den Figuren nicht dargestellt, da deren Aufbau hinlänglich bekannt ist. Die Presse kann hydraulisch oder mechanisch angetrieben sein und die Matrize 5 in raschen Zyklen auf die Patrize 7 hin bewegen, während die Folie 1 kurzfristig für den Prägevorgang stillgesetzt ist.

Nachfolgend wird der Ablauf des Rückgängigmachens eines Bereichs der grossflächigen Prägung oder mehrerer Bereiche gleichzeitig beschrieben. Die mit einer feinen Prägung, wie beispielsweise einer Orangenhaut-ähnlichen Prägung versehene Folie 1, wird vom Coil 3 zwischen der Matrize 5 und der Patrize 7 hindurchgeführt und jeweils kurzfristig stillgesetzt, damit durch die Presse in einem Hub die Matrize 5 auf die Patrize 7 gefahren und eine Kraft bzw. Pressung mit den Erhebungen 9 auf die Oberfläche der Folie 1 aufgebracht werden kann. Die Abstützung der Folie 1 erfolgt dabei ausschliesslich auf der Oberfläche der Ausgleichselemente 13 und - falls vorhanden - dem zwischen der Folie 1 und der Patrize 7 angeordnetem Schutzelement 15, z.B. ein sehr dünnes verformbares Blech über dem Ausgleichselement 13 liegt. Durch diese elastische Unterlage, welche im Bereich der Erhebung 9 entgegengesetzt wird, gelingt es in überraschender Weise, die auf der Folie 1 vorhandene Prägung im Bereich zwischen der Erhebung 9 und dem Ausgleichselement 13 vollständig rückgängig zu machen.

Das Schutzelement 15 hat direkt keinen Einfluss auf das Rückgängigmachen der Prägungen auf der Folie 1. Es schützt die Folie 1 und deren Prägungen, die auch auf der Unterseite der Folie vorhanden sind, so dass dort keine den Prozess störende Reibung beim Vorwärtstransport der Folie 1 in Richtung des Pfeiles A eintreten kann. Bei geprägten Folien 1 mit minimaler Prägetiefe und sehr glatter und allenfalls leicht gleitender Oberfläche, kann auf das Schutzblech 15 auch verzichtet werden.

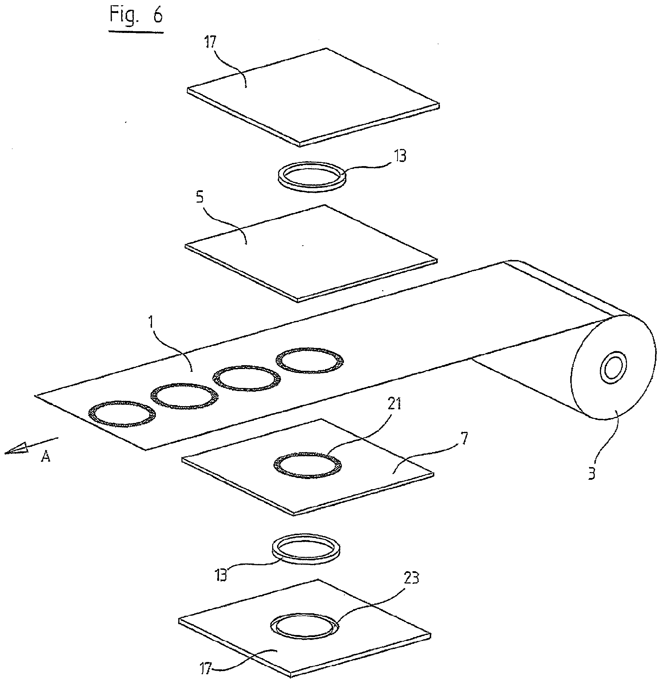

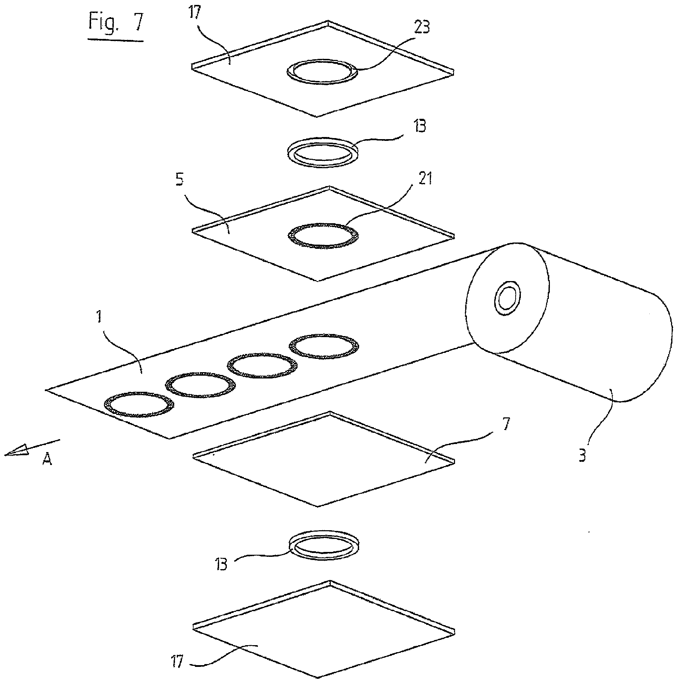

Überraschenderweise gelingt es mit dieser Vorgehensweise auch auf glatten, d.h. ungeprägten Folien 1, Prägungen beliebiger Gestalt aufzubringen, die nur einen Teilbereich der Oberfläche der Folie oder die gesamte Folie umfassen. In den Figuren 6 und 7 werden beispielsweise kreisringförmige Prägebereiche erstellt; die umgebenden und zentralen Bereiche bleiben frei, d.h. glatt. Solche Teilprägebereiche verhindern ebenfalls ein Zusammenkleben von übereinandergestapelten Stanzlingen und bewirken zugleich den Erhalt von beispielsweise in Mehrfarbentechnik aufgebrachten qualitativ hochstehenden Lackierungen/Bebilderungen der Folie. Die Erzeugung solcher partieller Prägungen wird nachfolgend anhand der Figuren 6 und 7 beschrieben.

In der Explosionsdarstellung gemäss den Figuren 6 und 7 sind die einzelnen Elemente des Prägewerkzeugs dargestellt. Oberhalb der Folie 1 ist eine Matrize dargestellt, an deren Unterseite durch Erhebungen 21 die Prägestruktur aufgebracht ist. Oberhalb der Matrize liegt ein Ausgleichselement 13, im vorliegenden Beispiel ein Kreisringelement, und darüber eine obere Aufnahmeplatte 17. In der Aufnahmeplatte 17 ist an deren Unterseite eine kreisringförmige Vertiefung 23 ausgebildet, in welcher das kreisringförmige Ausgleichselement 13 oder ein anders geformtes Ausgleichselement eingesetzt ist und wobei das Ausgleichselement 13 die Vertiefung 23 um wenige Zehntelsmillimeter überragt und auf der Rückseite der Matrize 5 direkt hinter den Erhebungen für die Prägung anliegt.

Spiegelbildlich dazu verhält es sich bei der Patrize 7, bei der auf der Oberfläche eine kreisringförmige Erhebung mit dem Prägemuster ausgebildet ist. Darunter liegt das kreisringförmige Ausgleichselement 13, welches in einer kreisringförmigen Vertiefung 23 in der unteren Aufnahmeplatte 17 ausgebildet ist. Nach dem Zusammenfügen dieser einzelnen Elemente liegt das Ausgleichselement 13, welches die untere Aufnahmeplatte 17 um wenige Zehntelsmillimeter überragt, an der Unterseite der Patrize an.

Das Prägen der ungeprägten Folie 1 erfolgt in herkömmlicher Weise mit dem Unterschied, dass die Matrize 5 und die Patrize 7 nicht starr mit der Stanz- und Prägemaschine verbunden sind, sondern dass diese beiden Elemente (Matrize und Patrize) im Bereich der die Prägung hervorrufenden Erhebungen 21 rückseitig elastisch abgestützt sind.

Um die örtliche Elastizität der Matrize 5 und der Patrize 7 zu erreichen, sind die beiden Elemente beispielsweise aus Messing hergestellt. Die Dicke der Messingplatte liegt im Bereich von 4 Millimetern, das heisst einer Dicke, die eine örtliche Elastizität, nämlich im Bereich der Erhebungen 21, gewährleistet.

Diese elastisch unterlegte Prägung erlaubt es mit wesentlich geringeren Presskräften durch die Stanz- und Prägevorrichtung, ein optimales Prägeergebnis zu erreichen.

## Patentansprüche

1. Prägewerkzeug zum Verformen von glatten und geprägten Folien (1) aus Metall oder Folien aus Laminaten aus Metall und Kunststoff, wobei das Prägewerkzeug in eine Stanz- und Prägemaschine einbaubar ausgebildet ist, und eine Matrize (5) mit einem Prägebereich und eine Patrize (7) umfasst, um eine zwischen Matrize (5) und Patrize (7) hindurchführbare oder einlegbare Folie (1) zu prägen, wobei an der Matrize (5) an deren Unterseite durch Erhebungen (21) eine Prägestruktur aufgebracht ist,
**dadurch gekennzeichnet,**
- **dass** oberhalb der Matrize (5) ein erstes Ausgleichselement (13) und darüber eine obere Aufnahmeplatte (17) liegt,
- **dass** in der Aufnahmeplatte (17) an deren Unterseite eine Vertiefung ausgebildet ist, in welcher das Ausgleichselement (13) eingesetzt ist, wobei das Ausgleichselement (13) die Vertiefung (23) um wenige Zehntelsmillimeter überragt und an der Rückseite der Matrize (5) direkt hinter den Erhebungen für die Prägung anliegt und
- **dass** spiegelbildlich zur Matrize (5) bei der Patrize (7) auf deren Oberfläche eine Erhebung mit dem Prägemuster ausgebildet ist, ein zweites, elastisch verformbares Ausgleichselement (13) in einer Vertiefung (23) in einer unteren Aufnahmeplatte (17) liegt und die untere Aufnahmeplatte (17) überragt.

2. Prägewerkzeug nach Anspruch 1, **dadurch gekennzeichnet, dass** die beiden Ausgleichselemente (13) koaxial einander gegenüberliegend angeordnet sind.

3. Prägewerkzeug nach Anspruch 1 oder 2, **dadurch gekennzeichnet, dass** das Ausgleichselement (13) aus Kunststoff aufgebaut ist.

4. Prägewerkzeug nach einem der Ansprüche 1 bis 3, **dadurch gekennzeichnet, dass** das Ausgleichselement (13) aus Polyurethan besteht.

## Claims

1. An embossing tool for deforming smooth and embossed films (1) made of metal or films made of laminates of metal and plastics, wherein the embossing tool is formed to be integratable into a stamping and embossing machine and comprises a matrix (5) with an embossing region and a patrix (7) to emboss a film (1) which is guidable or placeable between the matrix (5) and patrix (7), wherein an embossing structure is applied to the bottom side of the matrix (5) by elevations (21),
**characterized**
- **in that**, above the matrix (5), a first compensating element (13) is arranged and an upper receiving plate (17) is arranged above that,
- **in that**, in the receiving plate (17), a recess is formed at the bottom side thereof, in which recess the compensating element (13) is inserted, wherein the compensating element (13) projects beyond the recess (23) by a few tenths of a millimeter and lies at the back side of the matrix (5) directly behind the elevations for the embossing, and
- **in that**, in a mirror-image manner to the matrix (5) at the patrix (7) on the surface of which an elevation with the embossing pattern is formed, a second, elastically deformable compensating element (13) is arranged in a recess (23) in a lower receiving plate (17) and projects beyond the receiving plate (17).

2. The embossing tool according to Claim 1, **characterized in that** the two compensating elements (13) are arranged coaxially opposite each other.

3. The embossing tool according to Claim 1 or 2, **characterized in that** the compensating element (13) is constructed from plastics.

4. The embossing system according to any one of Claims 1 to 3, **characterized in that** the compensating element (13) consists of polyurethane.

## Revendications

1. Outil d'estampage pour la mise en forme de films lisses et gaufrés (1) en métal ou de films en stratifiés de métal et de plastique, l'outil d'estampage étant formé pour pouvoir être installé sur une machine d'estampage et de gaufrage, et une matrice (5) avec une zone de gaufrage et une matrice négative (7), afin de gaufrer un film pouvant être passé ou inséré entre la matrice (5) et la matrice négative (7), une structure de gaufrage étant appliquée sur le côté inférieur de la matrice (5), par des saillies (21), **caractérisé en ce que**
- un premier élément de compensation (13) et, au-dessus de celui-ci, une plaque d'accueil supérieure (17) sont situés au-dessus de la matrice (5),
- un creux est formé sur le côté inférieur de la plaque d'accueil (17), dans lequel l'élément de compensation (13) est placé, l'élément de compensation (13) dépassant le creux (23) de quelques dixièmes de millimètres et se trouvant contre le côté arrière de la matrice (5) directement derrière les saillies, pour le gaufrage et
- une saillie est formée, avec le motif de gaufrage en miroir par rapport à la matrice (5), par la matrice négative (7) sur la surface de celle-ci, un deuxième élément de compensation (13) déformable élastiquement se trouvant dans un creux (23) dans une plaque d'accueil inférieure (17) et la plaque d'accueil inférieure (17) dépassant.

2. Outil de gaufrage selon la revendication 1, **caractérisé en ce que** les deux éléments de compensation (13) sont disposés l'un en face de l'autre de façon coaxiale.

3. Outil de gaufrage selon la revendication 1 ou 2, **caractérisé en ce que** l'élément de compensation (13) est construit en plastique.

4. Outil de gaufrage selon l'une des revendications 1 à 3, **caractérisé en ce que** l'élément de compensation (13) se compose de polyuréthane.
